# EUROPEAN PATENT SPECIFICATION

(11) **EP 2 965 932 B1**
(45) Date of publication and mention of the grant of the patent: **08.05.2019**
(21) Application number: 14760661.0
(22) Date of filing: 05.03.2014
(51) Int. Cl.: B60H 1/22, B60H 1/32

(54) **VEHICLE AIR CONDITIONING DEVICE**
KLIMAANLAGEVORRICHTUNG FÜR FAHRZEUG
DISPOSITIF DE CLIMATISATION DE VÉHICULE

(30) Priority: 06.03.2013 JP 2013044136; 06.03.2013 JP 2013044133
(43) Date of publication of application: 13.01.2016
(73) Proprietor: Panasonic Intellectual Property Management Co., Ltd., Osaka-shi, Osaka 540-6207 (JP)
(72) Inventor: TERADA, Tomohiro, Osaka 540-6207 (JP); NODA, Yoshitoshi, Osaka 540-6207 (JP); TANIGUCHI, Katsuji, Osaka 540-6207 (JP); KURODA, Kentaro, Osaka 540-6207 (JP)
(74) Representative: SSM Sandmair
(86) International application number: PCT/JP2014/001213
(87) International publication number: WO 2014/136450

(56) References cited:
- WO-A1-2012/160434
- WO-A1-2013/000547
- FR-A1- 2 963 408
- JP-A- 2000 211 347
- US-A1- 2005 039 878
- US-A1- 2005 178 523
- US-A1- 2005 224 221
- US-A1- 2008 041 071

## Description

### Technical Field

The present invention relates to a vehicle air conditioning apparatus.

### Background Art

Conventionally, a vehicle air conditioning apparatus is proposed which performs cooling and heating of the vehicle interior using a heat pump (e.g., see PTL 1).

The vehicle air conditioning apparatus disclosed in PTL 1 performs air conditioning in the vehicle interior by switching between a heating refrigerant cycle path and a cooling refrigerant cycle path that shares part of the heating refrigerant cycle path (e.g., FIG. 1 of PTL 1).

US 2005/039878 A1 discloses a heat pump and air conditioning system for a vehicle that has at least one coolant loop selectively connecting an engine cooling system with a heater core, a first coolant/refrigerant heat exchanger, and/or a second coolant/refrigerant heat exchanger, in order to warm a passenger compartment of the vehicle. The system also includes a refrigerant loop that includes a first expansion device between a condenser and evaporator, and a second expansion device between the first coolant/refrigerant heat exchanger and the second coolant/refrigerant heat exchanger. The refrigerant loop provides for cooling of the passenger compartment of the vehicle, as well as operating as a heat pump, together with the at least one coolant loop, to provide heat to the vehicle passenger compartment.

US 2008/041071 A1 discloses a heat pump cycle device includes a compressor for drawing and compressing refrigerant, a first high-pressure heat exchanger located for heating a first fluid circulating in a first fluid circuit using high-pressure refrigerant discharged from the compressor, a second high-pressure heat exchanger for heating a second fluid circulating in a second fluid circuit using the high-pressure refrigerant flowing out of the first high-pressure heat exchanger, a first heating heat exchanger located to heat a third fluid using the first fluid, a second heating heat exchanger located to heat the third fluid using the second fluid, a decompression unit located to decompress the high-pressure refrigerant flowing out of the second high-pressure heat exchanger, and a low-pressure heat exchanger for evaporating low-pressure refrigerant decompressed by the decompression unit. Because the first and second high-pressure heat exchangers are located, cycle efficiency can be improved.

FR 2963408 A1 relates to an air conditioning system, in particular a motor vehicle, comprising an air conditioning loop and a secondary loop in which a heat transfer fluid circulates and cooperates with the air conditioning loop, the secondary loop comprising an upstream point and a downstream point between which a main pipe comprising a thermal storage module of the thermal storage module. The heat transfer fluid circulates simultaneously inside the main pipe and the bypass pipe.

US 2005/178523 A1 discloses an automotive air conditioning system having a primary hot water circuit located on a side where a vehicle installed heat generator is located and a secondary hot water circuit which includes a hot water type heater core for heating passenger compartment outlet air, whereby when in a heating mode, in the event that a coolant temperature of the primary hot water circuit is lower than a coolant temperature of the secondary hot water circuit, an opening and closing valve is closed, whereas an opening and closing valve is opened, so that a state is created in which the hot water circuits are separated from each other. On the other hand, in the event that the coolant temperature of the primary hot water circuit becomes higher than the coolant temperature of the secondary hot water circuit, the opening and closing valve is opened, whereas the opening and closing valve is closed, so that a state is created in which the hot water circuits are connected to each other.

### Citation List

### Patent Literature

PTL 1 Japanese Patent Application Laid-Open No. 8-197937

### Summary of Invention

### Technical Problem

However, in such a vehicle air conditioning apparatus that switches between two refrigerant paths by sharing part of the refrigerant path, the cooling refrigerant may flow into the cooling refrigerant cycle via the shared part when the heating refrigerant cycle is used, thereby causing liquefaction or so-called "stagnation" of the refrigerant in the refrigerant cycle in some cases. This results in a problem that the amount of refrigerant in the heating refrigerant cycle decreases and heating performance deteriorates.

This type of problem is not limited to the vehicle air conditioning apparatus disclosed in PTL 1 and can occur in a case where the first refrigerant cycle and the second refrigerant cycle are provided in various patterns while part of the refrigerant passage is shared.

An object of the present invention is to provide a vehicle air conditioning apparatus that eliminates a decline in the amount of refrigerant in a first refrigerant cycle and suppresses a decrease in air conditioning performance.

### Solution to Problem

The invention is defined by the appended claims.

A vehicle air conditioning apparatus according to an aspect of the present invention includes: a first refrigerant cycle that corresponds to a path for circulating a refrigerant and that forms a first heat pump cycle; a second refrigerant cycle that corresponds to a path for circulating a refrigerant, that forms a second heat pump cycle which is different from the first heat pump cycle and that shares part of the path with the first refrigerant cycle; a first water-refrigerant heat exchanger that is included in the first refrigerant cycle and that exchanges heat between a low-temperature and low-pressure refrigerant and a coolant of a heat-generating member of a vehicle to vaporize the refrigerant; a flow rate adjusting section that adjusts a flow rate of the coolant flowing through the heat-generating member and the first water-refrigerant heat exchanger; a detecting section that detects a decrease in an amount of refrigerant in the first refrigerant cycle due to inflow of the refrigerant into the second refrigerant cycle; and a controlling section that controls the flow rate adjusting section to reduce the flow rate of the coolant, when a decrease in the amount of refrigerant in the first refrigerant cycle is detected.

### Advantageous Effect of the Invention

According to the present invention, it is possible to eliminate a decline in the amount of refrigerant in the first refrigerant cycle and suppress a decrease in air conditioning performance.

### Brief Description of Drawings

FIG. 1 is a configuration diagram illustrating a vehicle air conditioning apparatus according to Embodiment 1 of the present invention;
FIG. 2 is a diagram provided for describing an operation in a heating mode of the vehicle air conditioning apparatus according to Embodiment 1 of the present invention;
FIG. 3 is a block diagram illustrating a functional configuration around an air conditioner ECU in the vehicle air conditioning apparatus according to Embodiment 1 of the present invention;
FIG. 4 is a flowchart illustrating a detailed operating procedure of the air conditioner ECU shown in FIG. 3;
FIG. 5 is a flowchart illustrating a stagnant refrigerant determining processing procedure shown in FIG. 4;
FIGS. 6A to 6C are diagrams provided for describing a stagnant refrigerant determining standard;
FIG. 7 is a flowchart illustrating a stagnant refrigerant recycling operation procedure shown in FIG. 4;
FIG. 8 is a flowchart illustrating a normal operation procedure shown in FIG. 4;
FIG. 9 is a diagram illustrating stagnation of the refrigerant together with a discharge pressure and a suction pressure;
FIG. 10 is a diagram illustrating a variation of coolant pipes of the vehicle air conditioning apparatus according to Embodiment 1;
FIG. 11 is a diagram illustrating a variation of the refrigerant circuit of the vehicle air conditioning apparatus according to Embodiment 1;
FIG. 12 is a configuration diagram illustrating a vehicle air conditioning apparatus according to Example 2 not forming part of the present invention;
FIG. 13 is a diagram provided for describing an operation in a heating mode of the vehicle air conditioning apparatus according to Example 2;
FIG. 14 is a block diagram illustrating a functional configuration around an air conditioner ECU in the vehicle air conditioning apparatus according to Example 2;
FIG. 15 is a flowchart illustrating a stagnant refrigerant recycling operation procedure shown in FIG. 4; and
FIG. 16 is a diagram illustrating a situation of stagnation of the refrigerant together with a discharge pressure and a suction pressure of the refrigerant.

### Description of Embodiments

Hereinafter, embodiments of the present invention will be described in detail with reference to the accompanying drawings.

### (Embodiment 1)

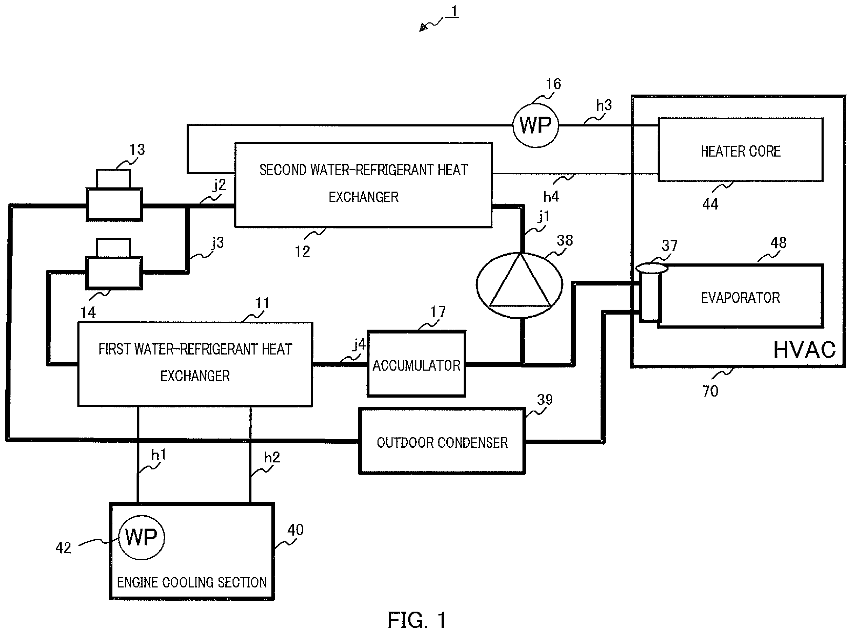

FIG. 1 is a configuration diagram illustrating a vehicle air conditioning apparatus according to Embodiment 1 of the present invention.

Vehicle air conditioning apparatus 1 is an apparatus mounted on a vehicle equipped with an engine (internal combustion engine) to perform heating, dehumidification and cooling of the vehicle interior.

Vehicle air conditioning apparatus 1 includes first water-refrigerant heat exchanger 11, second water-refrigerant heat exchanger 12, on-off valve 13, electromagnetic-valve-equipped expansion valve 14, second water pump 16, accumulator 17, expansion valve 37, compressor 38, outdoor condenser 39, engine cooling section 40, heater core 44, evaporator 48 and coolant pipes and refrigerant pipes connecting between these components, for example. Heater core 44 and evaporator 48 are arranged in an intake passage of Heating, Ventilation, and Air Conditioning (HVAC) 70. HVAC 70 is provided with a blower fan (not shown) for causing air to flow.

First water-refrigerant heat exchanger 11 includes a passage through which a low-temperature and low-pressure refrigerant flows and a passage through which a coolant flows, and exchanges heat between the refrigerant and the coolant. First water-refrigerant heat exchanger 11 is supplied with the low-temperature and low-pressure refrigerant in a predetermined operating mode and the coolant cyclically flows between first water-refrigerant heat exchanger 11 and engine cooling section 40 via pipes h1 and h2 to thereby transfer heat from the coolant to the low-temperature and low-pressure refrigerant.

Second water-refrigerant heat exchanger 12 includes a passage through which a high-temperature and high-pressure refrigerant flows and a passage through which a coolant flows, and exchanges heat between the refrigerant and the coolant. The coolant cyclically flows between second water-refrigerant heat exchanger 12 and heater core 44 in a predetermined operating mode, radiating heat from the high-temperature and high-pressure refrigerant to the coolant.

Second water pump 16 is provided for one of two pipes h3 and h4 connected respectively to an inlet and an outlet of the coolant of second water-refrigerant heat exchanger 12. Two pipes h3 and h4 are connected to heater core 44.

Second water pump 16 is a pump that can circulate a coolant between second water-refrigerant heat exchanger 12 and heater core 44 by electrical drive, for example.

Refrigerant pipe j1 connected to an inlet of the refrigerant of second water-refrigerant heat exchanger 12 is connected to a discharge port of compressor 38. Refrigerant pipe j2 connected to an outlet of the refrigerant of second water-refrigerant heat exchanger 12 is branched into two portions. One branched refrigerant pipe is connected to an inlet of the refrigerant of outdoor condenser 39 via on-off valve 13. Other branched refrigerant pipe j3 is connected to an inlet of the refrigerant of first water-refrigerant heat exchanger 11 via electromagnetic-valve-equipped expansion valve 14.

Refrigerant pipe j4 connected to an outlet of the refrigerant of first water-refrigerant heat exchanger 11 is connected to a refrigerant suction port of compressor 38 via accumulator 17. A refrigerant pipe of evaporator 48 is also joined and connected to the refrigerant suction port of compressor 38.

On-off valve 13 is a valve that opens or closes the refrigerant pipe through electrical control, for example.

Electromagnetic-valve-equipped expansion valve 14 is a valve that opens or closes the refrigerant pipe through electrical control, for example, and functions as an expansion valve when opened.

Accumulator 17 separates the refrigerant that has passed through first water-refrigerant heat exchanger 11 and has been vaporized from a non-vaporized refrigerant and sends only the vaporized refrigerant to compressor 38.

Compressor 38 is electrically driven to compress the suctioned refrigerant to a high temperature and a high pressure, and discharge the refrigerant. The compressed refrigerant is sent to second water-refrigerant heat exchanger 12.

Engine cooling section 40 includes a water jacket that causes the coolant to flow around an engine and first water pump 42 that causes the coolant to flow to the water jacket and first water-refrigerant heat exchanger 11, and causes heat from the engine to radiate onto the coolant that flows into the water jacket. First water pump 42 rotates via power of the engine, for example.

Heater core 44 is a device that exchanges heat between the coolant and air, and is disposed in an intake passage of HVAC 70 that supplies air into the vehicle interior. Heater core 44 is supplied with the heated coolant and radiates heat to the intake air to be sent into the vehicle interior during a heating operation.

Evaporator 48 is a device that exchanges heat between the low-temperature and low-pressure refrigerant and the air, and is disposed in the intake passage of HVAC 70. The low-temperature and low-pressure refrigerant flows through evaporator 48 during cooling operation or dehumidification operation, cooling the intake air supplied into the vehicle interior.

Expansion valve 37 causes the high-pressure refrigerant to expand to a low temperature and a low pressure, and discharges the refrigerant to evaporator 48. Expansion valve 37 is disposed in proximity to evaporator 48.

Outdoor condenser 39 includes a passage through which the refrigerant flows and a passage through which the air flows. Outdoor condenser 39 is disposed near the front of the vehicle in the engine room, for example, and exchanges heat between the refrigerant and outside air. The high-temperature and high-pressure refrigerant flows through outdoor condenser 39 in a cooling mode or a dehumidification mode, discharging heat from the refrigerant to the outside air. The outside air is blown over outdoor condenser 39 by a fan, for example.

Next, an operation of vehicle air conditioning apparatus 1 will be described.

### <Operation in Heating Mode>

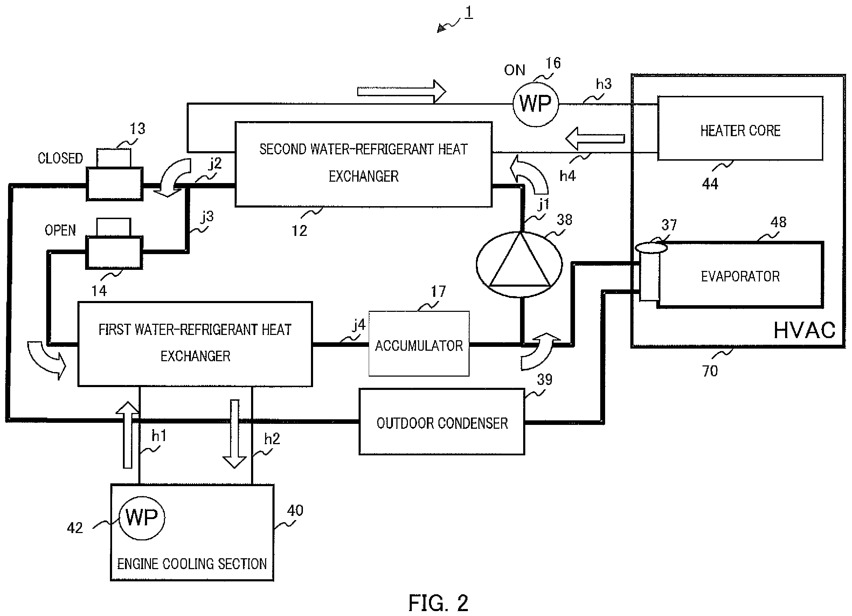

FIG. 2 is a diagram provided for describing operation in a heating mode of vehicle air conditioning apparatus 1.

When an operation in the heating mode is requested, on-off valve 13 is closed, electromagnetic-valve-equipped expansion valve 14 is opened and second water pump 16 is turned ON as shown in FIG. 2.

Furthermore, compressor 38 operates, and the refrigerant thereby cyclically flows through second water-refrigerant heat exchanger 12, electromagnetic-valve-equipped expansion valve 14, first water-refrigerant heat exchanger 11, accumulator 17, and compressor 38 in the order mentioned. This path is called "heating refrigerant cycle" (corresponding to the first refrigerant cycle).

In this case, the high-temperature and high-pressure refrigerant compressed by compressor 38 is made to radiate heat onto the coolant in second water-refrigerant heat exchanger 12 and is condensed. The low-temperature and low-pressure refrigerant expanded by electromagnetic-valve-equipped expansion valve 14 is made to absorb heat from the coolant in first water-refrigerant heat exchanger 11 and is vaporized.

The coolant is divided into two paths, flowing independently of each other. The coolant in a first path cyclically flows between engine cooling section 40 and first water-refrigerant heat exchanger 11. The coolant in the first path cools the engine in engine cooling section 40 and radiates heat onto the low-temperature and low-pressure refrigerant in first water-refrigerant heat exchanger 11.

The coolant in a second path cyclically flows between second water-refrigerant heat exchanger 12 and heater core 44 through second water pump 16. The coolant in the second path absorbs heat from the high-temperature and high-pressure refrigerant in second water-refrigerant heat exchanger 12 and radiates heat onto the intake air to be sent into the vehicle interior in heater core 44.

Heating of the vehicle interior is performed in this way.

In vehicle air conditioning apparatus 1, in the process of such operation, a refrigerant saturation pressure of outdoor condenser 39, which is installed in a low-temperature environment, decreases when the outside air temperature is low (e.g., -20°C), and therefore the pressure of outdoor condenser 39 falls below that of first water-refrigerant heat exchanger 11 having a higher temperature and the refrigerant flows into the refrigerant pipe (part of the cooling refrigerant cycle (corresponding to the second refrigerant cycle)) of evaporator 48 that is joined and connected to the heating refrigerant cycle at a refrigerant suction port of compressor 38. The refrigerant which has flown into the refrigerant pipe of evaporator 48 is stagnated in outdoor condenser 39.

A check valve may be generally provided to prevent the refrigerant from flowing from the heating refrigerant cycle to the cooling refrigerant cycle. However, when the check valve is provided, pressure loss occurs in an operating mode in which the refrigerant passes through the check valve (during cooling), and air conditioning performance deteriorates, leading to a cost increase.

Thus, a case will described in the present embodiment where without providing the check valve in vehicle air conditioning apparatus 1, an air conditioner Electronic Control Unit (ECU) controls each part in the apparatus and collects a stagnant refrigerant.

### <Functional Configuration around Air Conditioner ECU>

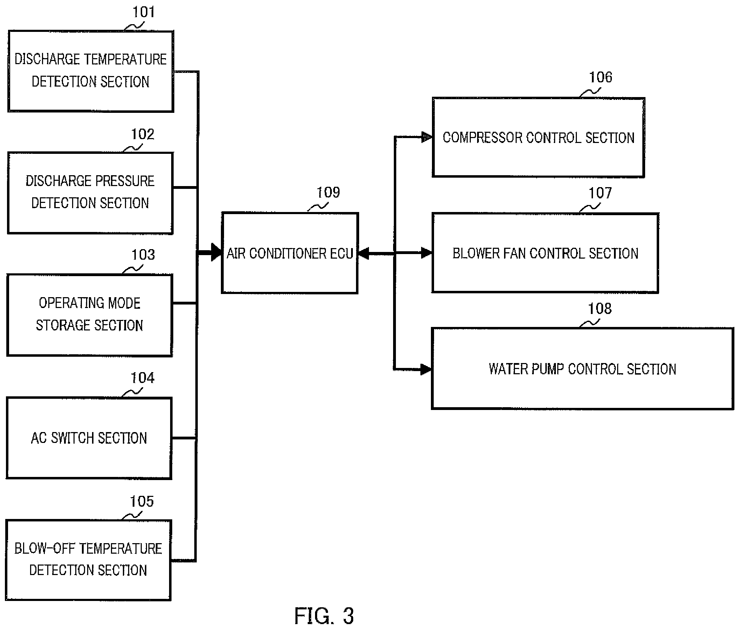

FIG. 3 is a block diagram illustrating a functional configuration around the air conditioner ECU in vehicle air conditioning apparatus 1 according to Embodiment 1 of the present invention.

Discharge temperature detection section 101 detects a temperature of the refrigerant discharged from compressor 38 and notifies air conditioner ECU 109 of the detected temperature of the refrigerant. Discharge pressure detection section 102 detects the pressure of the refrigerant discharged from compressor 38 and notifies air conditioner ECU 109 of the detected pressure of the refrigerant.

Operating mode storage section 103 stores a current operating mode of vehicle air conditioning apparatus 1, that is, heating mode, cooling mode, and dehumidification mode or the like and notifies air conditioner ECU 109 of the current operating mode.

AC switch section 104 is a switch for the user to control air conditioning in the vehicle interior, receives instructions on on/off of the air conditioner, temperature and volume of air or the like from the user and outputs the instructions from the user to air conditioner ECU 109.

Blow-off temperature detection section 105 detects a blow-off temperature of intake air heat-exchanged by heater core 44 or evaporator 48 in HVAC 70 and supplied into the vehicle interior, and notifies air conditioner ECU 109 of the detected blow-off temperature.

Compressor control section 106 controls the number of revolutions of compressor 38 based on the control of air conditioner ECU 109 and notifies air conditioner ECU 109 of the number of revolutions or the like of compressor 38.

Blower fan control section 107 controls the number of revolutions of a blower fan in HVAC 70 based on the control of air conditioner ECU 109 and notifies air conditioner ECU 109 of the number of revolutions or the like of the blower fan.

Water pump control section 108 controls the number of revolutions of first water pump 42 and second water pump 16 inside engine cooling section 40 based on the control of air conditioner ECU 109, and notifies air conditioner ECU 109 of the number of revolutions or the like of first water pump 42 and second water pump 16.

Air conditioner ECU 109 determines whether or not stagnation has occurred in the cooling refrigerant cycle in the heating mode based on information from various detection sections, switches, and various control sections, and performs, when stagnation has occurred, a stagnant refrigerant recycling operation of collecting the stagnant refrigerant in the heating refrigerant cycle and performs, when stagnation has not occurred, a normal operation. Detailed operation of air conditioner ECU 109 will be described later.

### <Operation of Air Conditioner ECU>

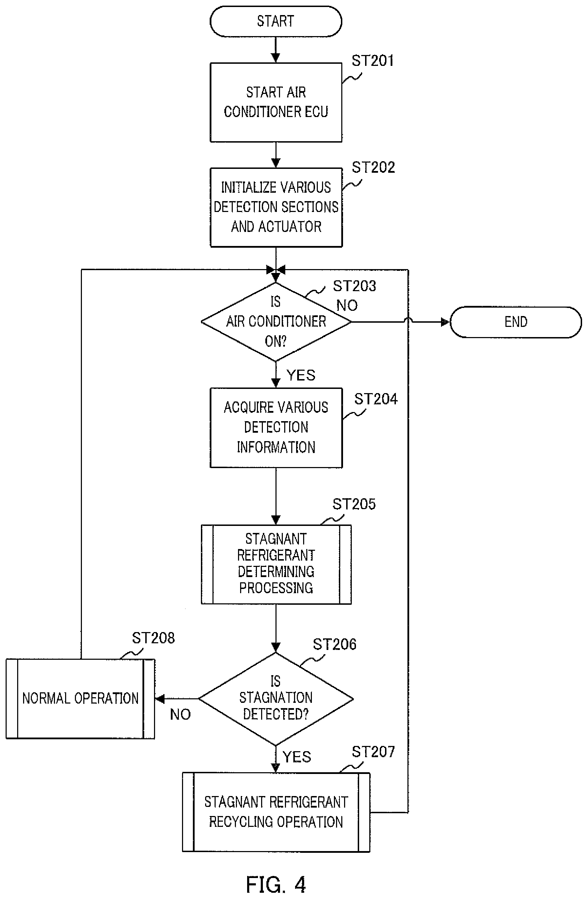

Next, a detailed operation of aforementioned air conditioner ECU 109 will be described using FIG. 4.

In FIG. 4, in step (hereinafter abbreviated as "ST") 201, air conditioner ECU 109 is activated in response to ignition ON operation, and in ST202, air conditioner ECU 109 initializes various detection sections and an actuator for opening/closing various doors provided in HVAC 70.

In ST203, air conditioner ECU 109 determines whether or not air conditioner ON instruction is received from AC switch section 104, proceeds to ST204 when an air conditioner ON instruction is received (YES) or ends the operation of air conditioner ECU 109 when no air conditioner ON instruction is received (NO).

In ST204, air conditioner ECU 109 acquires detection information from the various detection sections, and in ST205, air conditioner ECU 109 performs stagnant refrigerant determining processing. Details of the stagnant refrigerant determining processing will be described later.

In ST206, air conditioner ECU 109 determines whether or not stagnation of the refrigerant has occurred as a result of the stagnant refrigerant determining processing in ST205 and proceeds to ST207 when stagnation has occurred (YES), or proceeds to ST208 when no stagnation has occurred (NO).

In ST207, air conditioner ECU 109 performs stagnant refrigerant recycling operation and returns to ST203. Details of the stagnant refrigerant recycling operation will be described later.

In ST208, air conditioner ECU 109 performs a normal operation and returns to ST203. Details of the normal operation will be described later.

### <Stagnation Determining Processing>

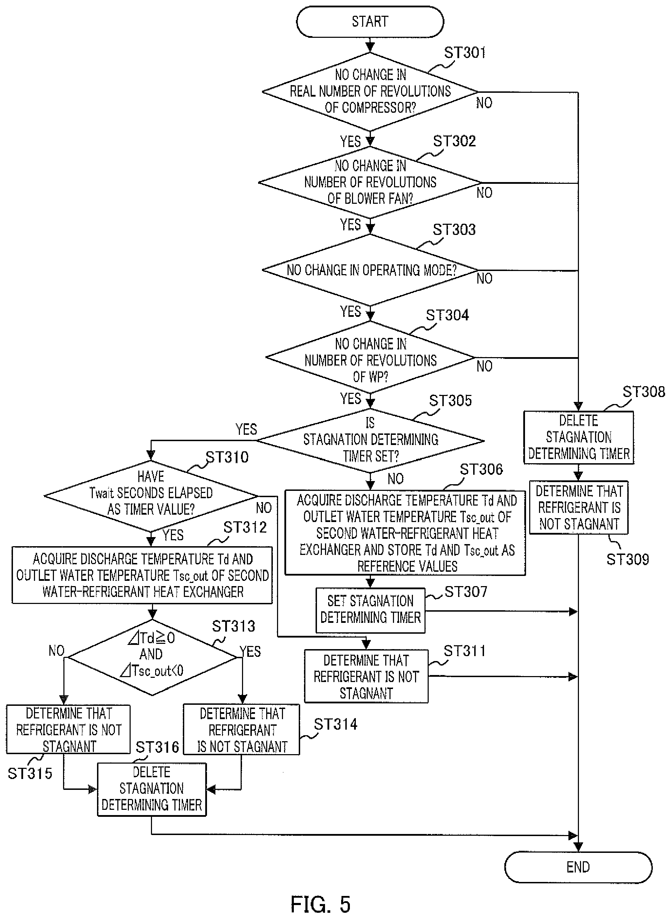

Next, the stagnant refrigerant determining processing shown in FIG. 4 will be described using FIG. 5.

In FIG. 5, in ST301, air conditioner ECU 109 determines whether the number of revolutions of compressor 38 has not been changed, and proceeds to ST302 when there is no change (YES) or proceeds to ST308 when there is a change (NO).

In ST302, air conditioner ECU 109 determines whether the number of revolutions (volume of air) of the blower fan in HVAC 70 has not been changed, and proceeds to ST303 when there is no change (YES) or proceeds to ST308 when there is a change (NO).

In ST303, air conditioner ECU 109 determines whether the operating mode has not been changed, and proceeds to ST304 when there is no change (YES) or proceeds to ST308 when there is a change (NO).

In ST304, air conditioner ECU 109 determines whether the number of revolutions of second water pump 16 has been changed, and proceeds to ST305 when there is no change (YES) or proceeds to ST308 when there is a change (NO). Note that steps ST301 to ST304 may be performed in any order or performed simultaneously.

In ST305, air conditioner ECU 109 determines whether or not a stagnation determining timer is set, and proceeds to ST310 when the stagnation determining timer is set (YES) or proceeds to ST306 when the stagnation determining timer is not set (NO).

In ST306, air conditioner ECU 109 acquires discharge temperature Td of the refrigerant and outlet water temperature Tsc_out of the coolant in second water-refrigerant heat exchanger 12, stores these values as reference values, and in ST307, air conditioner ECU 109 sets the stagnation determining timer to set value Twait seconds and ends the stagnant refrigerant determining processing.

In ST308, air conditioner ECU 109 deletes the stagnation determining timer set in ST307 and determines in ST309 that no stagnation of the refrigerant has occurred and ends the stagnant refrigerant determining processing.

In ST310, air conditioner ECU 109 determines whether or not set value Twait seconds have elapsed in the stagnation determining timer, and proceeds to ST312 when Twait seconds have elapsed (YES) or determines in ST311 that no stagnation of the refrigerant has occurred when Twait seconds have not elapsed (NO), and ends the stagnant refrigerant determining processing.

In ST312, air conditioner ECU 109 acquires discharge temperature Td of the refrigerant and outlet water temperature Tsc_out of the coolant in second water-refrigerant heat exchanger 12, and determines in ST313, from the reference values stored in ST306 and discharge temperature Td of the refrigerant and outlet water temperature Tsc_out of the coolant acquired in ST312 whether the conditions that variation ΔTd of discharge temperature Td of the refrigerant should be equal to or greater than 0 and variation ΔTsc_out of the outlet water temperature of second water-refrigerant heat exchanger 12 should be smaller than 0 are satisfied or not. Air conditioner ECU 109 proceeds to ST314 when these conditions are satisfied (YES) or proceeds to ST315 when these conditions are not satisfied (NO).

In ST314, air conditioner ECU 109 determines that stagnation of the refrigerant has occurred or on the other hand, determines in ST315 that stagnation of the refrigerant has not occurred.

In ST316, air conditioner ECU 109 deletes the stagnation determining timer and ends the stagnant refrigerant determining processing.

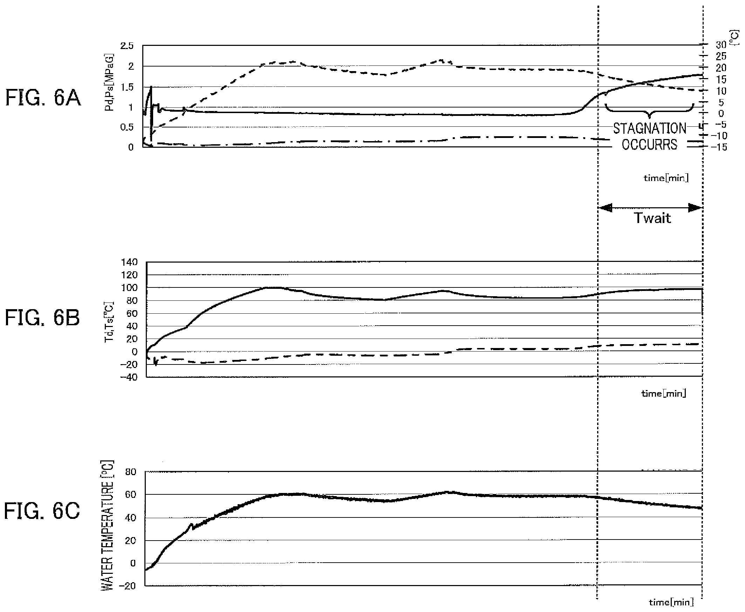

Thus, in the stagnant refrigerant determining processing, it is determined that stagnation of the refrigerant has occurred when outlet water temperature Tsc_out of second water-refrigerant heat exchanger 12 has decreased despite the fact that discharge temperature Td remains constant or has increased under the condition that there is no change in the number of revolutions of the compressor, the number of revolutions of the blower fan, operating mode (corresponding to external air temperature and ambient temperature) and the number of revolutions of the second water pump. This situation is shown in FIGS. 6A to 6C.

FIG. 6A is a diagram illustrating stagnation of the refrigerant together with a discharge pressure and a suction pressure of the refrigerant, the horizontal axis showing a time scale and the vertical axis showing a pressure and a temperature. Furthermore, a solid line illustrates the degree of overheating of a compressor suction section, which indicates a status of stagnation, while a dotted line illustrates a discharge pressure of the refrigerant and a single-dot dashed line illustrates a suction pressure of the refrigerant. Note that the degree of overheating of the compressor suction section increases as the refrigerant stagnates and decreases as stagnation of the refrigerant is canceled.

FIG. 6B is a diagram illustrating suction temperature Ts and discharge temperature Td of the refrigerant, the horizontal axis showing a time scale and the vertical axis showing a temperature. A solid line illustrates discharge temperature Td and a dotted line illustrates suction temperature Ts. FIG. 6C is a diagram illustrating an outlet water temperature of the first water-refrigerant heat exchanger, the horizontal axis showing a time scale and the vertical axis showing a temperature.

In section Twait in FIGS. 6A to 6C, since the degree of overheating of compressor suction section increases in FIG. 6A, it can be found that stagnation of the refrigerant has occurred. At this time, while discharge temperature Td remains constant or has increased (see FIG. 6B), the outlet water temperature of the second water-refrigerant heat exchanger has decreased (see FIG. 6C).

Note that since stagnation of the refrigerant means a decrease in the amount of refrigerant in the heating refrigerant cycle, the stagnant refrigerant determining processing corresponds to a section that detects a decrease in the amount of refrigerant in the heating refrigerant cycle.

In the above description, discharge temperature Td of the refrigerant and outlet water temperature Tsc_out of the coolant in the second water-refrigerant heat exchanger 12 are used for the stagnant refrigerant determining processing under the condition that there is no change in the number of revolutions of the compressor, the number of revolutions of the blower fan, operating mode (corresponding to the external air temperature and ambient temperature) and the number of revolutions of the second water pump, but the present invention is not limited to this. For example, under the above-described condition, a determination can be made from a discharge pressure and a discharge temperature of the refrigerant, and in this case, it is determined that stagnation of the refrigerant has occurred if the discharge temperature remains constant and the discharge pressure has decreased. Moreover, the degree of overheating of the compressor suction section indicating that the refrigerant cycle is in a refrigerant shortage state may be measured directly, and in this case, it is determined that stagnation of the refrigerant has occurred if the degree of overheating has increased.

### <Stagnant Refrigerant Recycling Operation>

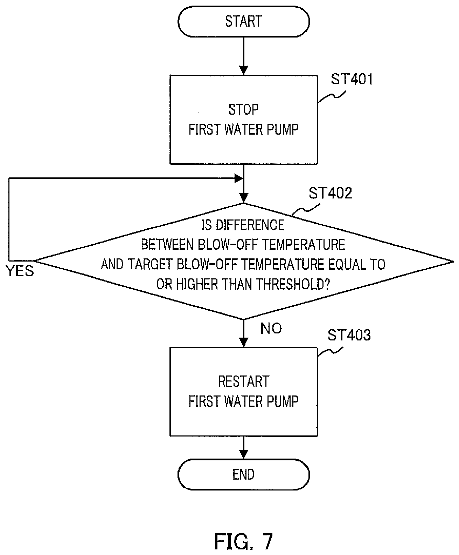

Next, the stagnant refrigerant recycling operation shown in FIG. 4 will be described using FIG. 7.

In FIG. 7, air conditioner ECU 109 stops first water pump 42 inside engine cooling section 40 in ST401, determines in ST402 whether or not a difference between a blow-off temperature and a target blow-off temperature is equal to or greater than a predetermined threshold, and returns to ST402 while keeping first water pump 42 stopped when the difference is equal to or greater than the threshold (YES) or proceeds to ST403 when the difference is less than the threshold (NO).

In ST403, air conditioner ECU 109 restarts first water pump 42 and ends the stagnant refrigerant recycling operation.

Thus, when stagnation occurs, stopping the first water pump inside engine cooling section 40 causes the low pressure of first water-refrigerant heat exchanger 11 to decrease, making it possible to recycle the refrigerant stored in outdoor condenser 39 into compressor 38 and return the refrigerant to the heating refrigerant cycle.

Note that in the above description, first water pump 42 is stopped in the stagnant refrigerant recycling operation, but the present invention is not limited to this, and the number of revolutions of first water pump 42 may be reduced to or below a predetermined value. Here, the predetermined value may be a value smaller than the number of revolutions of first water pump 42 when the coolant water temperature of the engine is stabilized.

### <Normal Operation Processing>

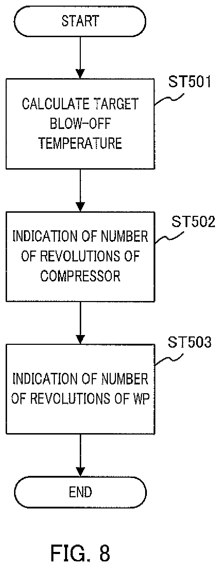

Next, the normal operation shown in FIG. 4 will be described using FIG. 8.

In FIG. 8, in ST501, air conditioner ECU 109 calculates a target blow-off temperature.

In ST502, air conditioner ECU 109 indicates the number of revolutions of compressor 38 based on the target blow-off temperature and indicates in ST503 the number of revolutions of second water pump 16 based on the target blow-off temperature.

### <Situation of Stagnation of Refrigerant>

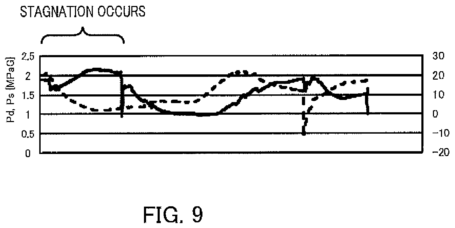

FIG. 9 is a diagram illustrating stagnation of the refrigerant together with a discharge pressure and a suction pressure of the refrigerant. In FIG. 9, the horizontal axis shows a time scale and the vertical axis shows a pressure and a temperature. A solid line illustrates the degree of overheating of a compressor suction section indicating a status of stagnation and a dotted line illustrates a discharge pressure of the refrigerant.

As can be seen from FIG. 9, if first water pump 42 is stopped at a stage at which the degree of overheating of the compressor suction section has increased and stagnation has occurred, the discharge pressure decreases, the degree of overheating of the compressor suction section also decreases along with this, and stagnation is thereby resolved. In FIG. 9, the degree of overheating of the compressor suction section decreases sufficiently thereafter and when the stagnant refrigerant is recycled into the heating refrigerant cycle, the discharge pressure increases, and first water pump 42 is thereby restarted.

### <Effects of Embodiment 1>

Thus, vehicle air conditioning apparatus 1 of the present embodiment includes compressor 38 and the heating refrigerant cycle and the cooling refrigerant cycle that have a part of path in common, and when air conditioner ECU 109 detects a decrease in the amount of refrigerant in the heating refrigerant cycle due to an inflow of the refrigerant into the cooling refrigerant cycle, air conditioner ECU 109 causes to stop first water pump 42 that transports the coolant between first water-refrigerant heat exchanger 11 and engine cooling section 40.

This causes the low pressure of first water-refrigerant heat exchanger 11 to decrease, making it possible to recycle the refrigerant stored in the cooling refrigerant cycle into compressor 38 and return the refrigerant to the heating refrigerant cycle. As a result, it is possible to suppress deterioration of heating performance.

Moreover, since it is possible to eliminate the need to provide a check valve for preventing inflow of the refrigerant from the heating refrigerant cycle into the cooling refrigerant cycle, it is possible to prevent pressure loss and deterioration of air conditioning performance due to the pressure loss which would be generated when the check valve is provided, and also to suppress a cost increase.

Note that a case has been described in the present embodiment where first water-refrigerant heat exchanger 11 causes the coolant to cyclically flow between first water-refrigerant heat exchanger 11 and engine cooling section 40. However, the present invention is not limited to this. First water-refrigerant heat exchanger 11 may also cause the coolant to cyclically flow between first water-refrigerant heat exchanger 11 and a heat-generating member such as a driving motor used for an electric bicycle, inverter for driving the driving motor, battery for supplying electric energy to the driving motor, battery charger for charging the battery from outside of a vehicle and DC-DC converter for voltage conversion of the battery.

A case has been described in the present embodiment where vehicle air conditioning apparatus 1 includes accumulator 17. However, the present invention is not limited to this and vehicle air conditioning apparatus 1 may not include accumulator 17.

### <Variations>

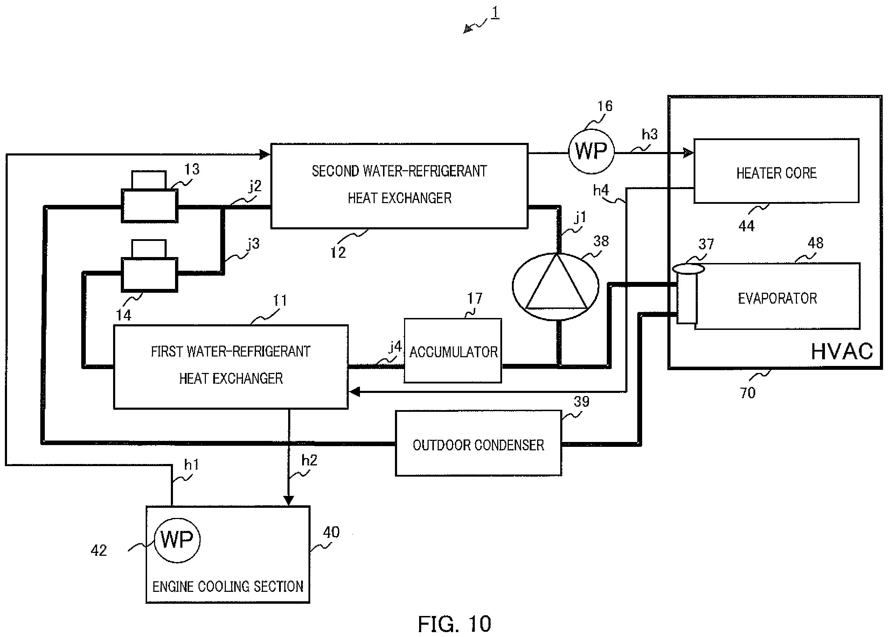

A case has been described in the present embodiment where first water-refrigerant heat exchanger 11 and engine cooling section 40 are connected via pipes h1 and h2 of the coolant, and second water-refrigerant heat exchanger 12 and heater core 44 are connected via pipes h3 and h4 of the coolant, but the present invention is not limited to this. For example, as shown in FIG. 10, engine cooling section 40 and second water-refrigerant heat exchanger 12 may be connected via pipe h1 of the coolant, second water-refrigerant heat exchanger 12 and heater core 44 may be connected via pipe h3 of the coolant, heater core 44 and first water-refrigerant heat exchanger 11 may be connected via pipe h4 of the coolant and first water-refrigerant heat exchanger 11 and engine cooling section 40 may be connected via pipe h2 of the coolant. Thus, the coolant circulates through engine cooling section 40, second water-refrigerant heat exchanger 12, heater core 44, first water-refrigerant heat exchanger 11, and engine cooling section 40 in that order.

A refrigerant circuit has been described in the present embodiment in which the refrigerant discharged from compressor 38 is sent to outdoor condenser 39 via second water-refrigerant heat exchanger 12 during the cooling operation or dehumidification operation, but the present invention is not limited to this circuit configuration.

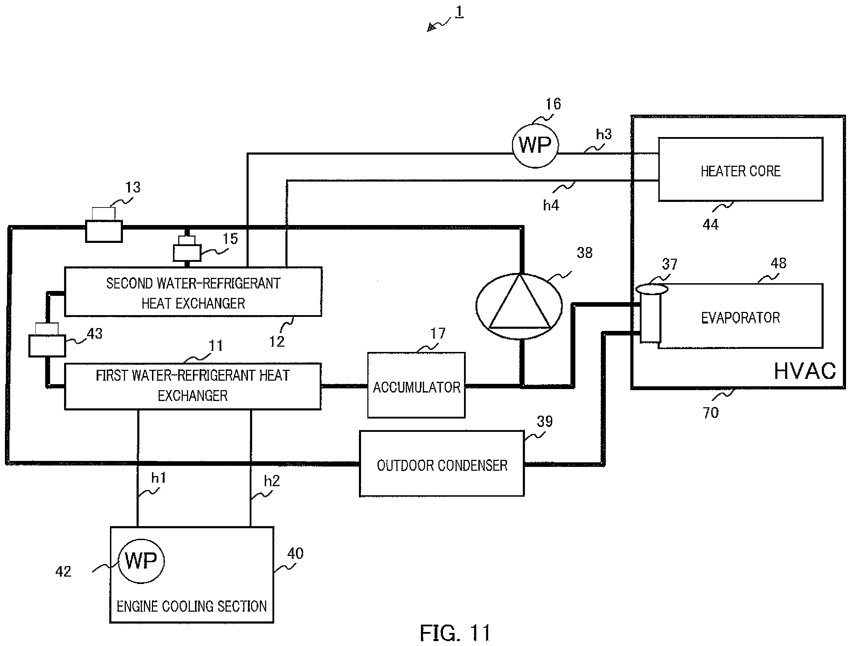

FIG. 11 illustrates a variation of the refrigerant circuit of the vehicle air conditioning apparatus of the embodiment.

With the refrigerant pipe being branched at the discharge port of compressor 38, the refrigerant circuit in FIG. 11 includes a path for sending the refrigerant from compressor 38 to second water-refrigerant heat exchanger 12 and a path for sending the refrigerant from compressor 38 to outdoor condenser 39 without passing through second water-refrigerant heat exchanger 12. The refrigerant circuit in FIG. 11 is provided with on-off valve 13 and on-off valve 15 for selecting whether to send the refrigerant discharged from compressor 38 to second water-refrigerant heat exchanger 12 or to outdoor condenser 39.

In the refrigerant circuit in FIG. 11, when on-off valve 15 is opened and on-off valve 13 is closed, the refrigerant flows through compressor 38, second water-refrigerant heat exchanger 12, expansion valve 43, first water-refrigerant heat exchanger 11, and accumulator 17 in the order mentioned. At this time, it is possible to transfer heat from first water-refrigerant heat exchanger 11 to second water-refrigerant heat exchanger 12 by heat pump operation.

In the refrigerant circuit in FIG. 11, when on-off valve 15 is closed and on-off valve 13 is opened, the refrigerant flows through compressor 38, outdoor condenser 39, expansion valve 37, and evaporator 48 in the order mentioned. At this time, it is possible to transfer heat from evaporator 48 to outdoor condenser 39 by heat pump operation.

The refrigerant circuit of Embodiment 1 can be changed to the refrigerant circuit in FIG. 11.

In the present embodiment, the flow rate of the coolant flowing through pipes h1 and h2 is adjusted by controlling the number of revolutions of first water pump 42 inside engine cooling section 40, but the present invention is not limited to this. The flow rate may be adjusted using, for example, an on-off valve or throttle valve instead of the water pump as the flow rate adjusting section.

### Example 2

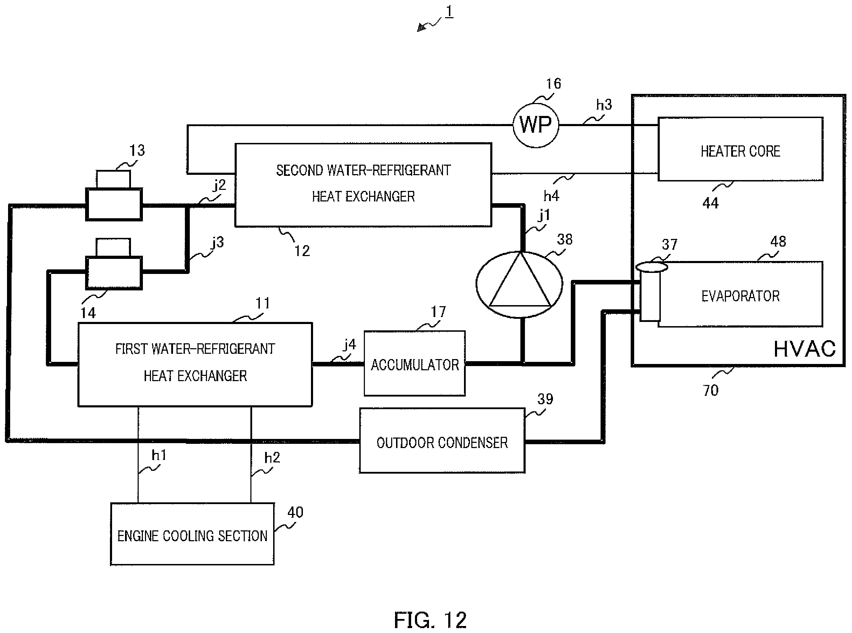

FIG. 12 is a configuration diagram illustrating a vehicle air conditioning apparatus according to Example 2 not forming part of the present invention.

Vehicle air conditioning apparatus 1 is an apparatus mounted on a vehicle equipped with an engine (internal combustion engine) to perform heating, dehumidification and cooling of the vehicle interior.

Vehicle air conditioning apparatus 1 includes first water-refrigerant heat exchanger 11, second water-refrigerant heat exchanger 12, on-off valve 13, electromagnetic-valve-equipped expansion valve 14, water pump 16, accumulator 17, expansion valve 37, compressor 38, outdoor condenser 39, engine cooling section 40, heater core 44, evaporator 48 and coolant pipes and refrigerant pipes connecting between these components or the like. Heater core 44 and evaporator 48 are arranged in an intake passage of Heating, Ventilation, and Air Conditioning (HVAC) 70. HVAC 70 is provided with a blower fan (not shown) through which intake air flows.

First water-refrigerant heat exchanger 11 includes a passage through which a low-temperature and low-pressure refrigerant flows and a passage through which a coolant flows, and exchanges heat between the refrigerant and the coolant. First water-refrigerant heat exchanger 11 is supplied with the low-temperature and low-pressure refrigerant in a predetermined operating mode and the coolant cyclically flows between first water-refrigerant heat exchanger 11 and engine cooling section 40 via pipes h1 and h2 to thereby transfer heat from the coolant to the low-temperature and low-pressure refrigerant.

Second water-refrigerant heat exchanger 12 includes a passage through which a high-temperature and high-pressure refrigerant flows and a passage through which a coolant flows, and exchanges heat between the refrigerant and the coolant. The coolant cyclically flows between second water-refrigerant heat exchanger 12 and heater core 44 in a predetermined operating mode, radiating heat from the high-temperature and high-pressure refrigerant to the coolant.

Water pump 16 is provided for one of two pipes h3 and h4 connected respectively to an inlet and an outlet of the coolant of second water-refrigerant heat exchanger 12. Two pipes h3 and h4 are connected to heater core 44.

Water pump 16 is a pump that can circulate a coolant between second water-refrigerant heat exchanger 12 and heater core 44 by electrical drive, for example.

Refrigerant pipe j1 connected to an inlet of the refrigerant of second water-refrigerant heat exchanger 12 is connected to a discharge port of compressor 38. Refrigerant pipe j2 connected to an outlet of the refrigerant of second water-refrigerant heat exchanger 12 is branched into two portions. One branched refrigerant pipe is connected to an inlet of the refrigerant of outdoor condenser 39 via on-off valve 13. Other branched refrigerant pipe j3 is connected to an inlet of the refrigerant of first water-refrigerant heat exchanger 11 via electromagnetic-valve-equipped expansion valve 14.

Refrigerant pipe j4 connected to an outlet of the refrigerant of first water-refrigerant heat exchanger 11 is connected to a refrigerant suction port of compressor 38 via accumulator 17. A refrigerant pipe of evaporator 48 is also joined and connected to the refrigerant suction port of compressor 38.

On-off valve 13 is a valve that opens or closes the refrigerant pipe through electrical control, for example.

Electromagnetic-valve-equipped expansion valve 14 is a valve that opens or closes the refrigerant pipe through electrical control, for example, and functions as an expansion valve when opened.

Accumulator 17 separates a refrigerant that has passed through first water-refrigerant heat exchanger 11 and has been vaporized from a non-vaporized refrigerant and sends only the vaporized refrigerant to compressor 38.

Compressor 38 is electrically driven to compress the suctioned refrigerant to a high temperature and a high pressure, and discharge the refrigerant. The compressed refrigerant is sent to second water-refrigerant heat exchanger 12.

Engine cooling section 40 includes a water jacket that causes the coolant to flow around an engine and water pump that causes the coolant to flow to the water jacket, and causes heat from the engine to radiate onto the coolant that flows into the water jacket. Water pump rotates via power of the engine, for example.

Heater core 44 is a device that exchanges heat between the coolant and air, and is disposed in an intake passage of HVAC 70 that supplies air into vehicle interior. Heater core 44 is supplied with the heated coolant and radiates heat to the intake air to be sent into the vehicle interior during the heating operation.

Evaporator 48 is a device that exchanges heat between the low-temperature and low-pressure refrigerant and the air, and is disposed in the intake passage of HVAC 70. The low-temperature and low-pressure refrigerant flows through evaporator 48 during the cooling operation or dehumidification operation, cooling the intake air supplied into the vehicle interior.

Expansion valve 37 causes the high-pressure refrigerant to expand to a low temperature and a low pressure, and discharges the refrigerant to evaporator 48. Expansion valve 37 is disposed in proximity to evaporator 48.

Outdoor condenser 39 includes a passage through which the refrigerant flows and a passage through which the air flows, is disposed near the front of the vehicle in the engine room, for example, and exchanges heat between the refrigerant and outside air. The high-temperature and high-pressure refrigerant flows through outdoor condenser 39 in a cooling mode or a dehumidification mode, discharging heat from the refrigerant to the outside air. The outside air is blown over outdoor condenser 39 by a fan, for example.

Next, an operation of vehicle air conditioning apparatus 1 will be described.

### <Operation in Heating Mode>

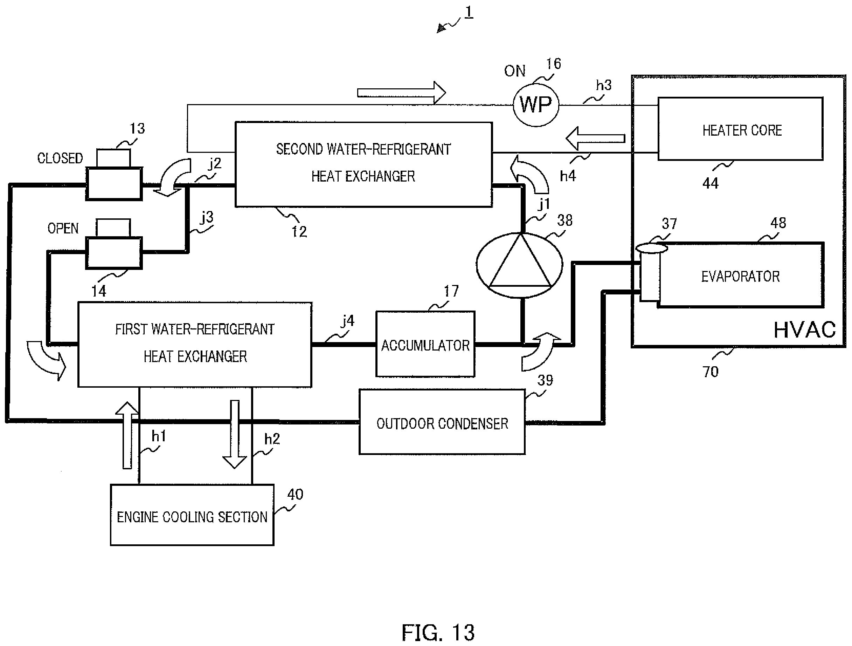

FIG. 13 is a diagram provided for describing an operation in a heating mode of the vehicle air conditioning apparatus 1.

When an operation in the heating mode is requested, on-off valve 13 is closed, electromagnetic-valve-equipped expansion valve 14 is opened and water pump 16 is turned ON as shown in FIG. 13.

Furthermore, compressor 38 operates, and the refrigerant thereby cyclically flows through second water-refrigerant heat exchanger 12, electromagnetic-valve-equipped expansion valve 14, first water-refrigerant heat exchanger 11, accumulator 17, and compressor 38 in the order mentioned. This path is called "heating refrigerant cycle" (corresponding to the first refrigerant cycle).

In this case, the high-temperature and high-pressure refrigerant compressed by compressor 38 is made to radiate heat onto the coolant in second water-refrigerant heat exchanger 12 and is condensed. The low-temperature and low-pressure refrigerant expanded by electromagnetic-valve-equipped expansion valve 14 is made to absorb heat from the coolant in first water-refrigerant heat exchanger 11 and is vaporized.

The coolant is divided into two paths, flowing independently of each other. The coolant in a first path cyclically flows between engine cooling section 40 and first water-refrigerant heat exchanger 11. The coolant in the first path cools the engine in engine cooling section 40 and radiates heat onto the low-temperature and low-pressure refrigerant in first water-refrigerant heat exchanger 11.

The coolant in a second path cyclically flows between second water-refrigerant heat exchanger 12 and heater core 44 through water pump 16. The coolant in the second path absorbs heat from the high-temperature and high-pressure refrigerant in second water-refrigerant heat exchanger 12 and radiates heat onto the intake air to be sent into the vehicle interior in heater core 44.

Heating of the vehicle interior is performed in this way.

In vehicle air conditioning apparatus 1, in the process of such an operation, a refrigerant saturation pressure of outdoor condenser 39 which is installed in a low-temperature environment decreases when the outside air temperature is low (e.g., -20°C), and therefore the pressure of outdoor condenser 39 falls below that of first water-refrigerant heat exchanger 11 having a higher temperature and the refrigerant flows into the refrigerant pipe (part of the cooling refrigerant cycle (corresponding to the second refrigerant cycle)) of evaporator 48 that is joined and connected to the heating refrigerant cycle at a refrigerant suction port of compressor 38. The refrigerant which has flown into the refrigerant pipe of evaporator 48 is stagnated in outdoor condenser 39.

A check valve may be generally provided to prevent the refrigerant from flowing from the heating refrigerant cycle to the cooling refrigerant cycle. However, when the check valve is provided, pressure loss occurs in an operating mode in which the refrigerant passes through the check valve (during cooling), and air conditioning performance deteriorates, leading to a cost increase.

Thus, a case will described where without providing the check valve in vehicle air conditioning apparatus 1, an air conditioner Electronic Control Unit (ECU) controls each part in the apparatus and collects a stagnant refrigerant.

### <Functional Configuration Peripheral to Air Conditioner ECU>

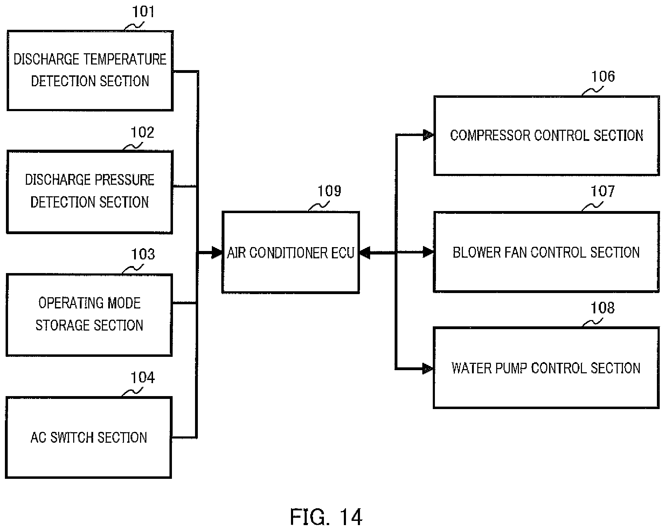

FIG. 14 is a block diagram illustrating a functional configuration peripheral to the air conditioner ECU in vehicle air conditioning apparatus 1 according to Example 2.

Discharge temperature detection section 101 detects a temperature of the refrigerant discharged from compressor 38 and notifies air conditioner ECU 109 of the detected temperature of the refrigerant. Discharge pressure detection section 102 detects the pressure of the refrigerant discharged from compressor 38 and notifies air conditioner ECU 109 of the detected pressure of the refrigerant.

Operating mode storage section 103 stores a current operating mode of vehicle air conditioning apparatus 1, that is, heating mode, cooling mode, and dehumidification mode or the like and notifies air conditioner ECU 109 of the current operating mode.

AC switch section 104 is a switch for the user to control air conditioning in the vehicle interior, receives instructions on on/off of the air conditioner, temperature and volume of air or the like from the user and outputs the instructions from the user to air conditioner ECU 109.

Compressor control section 106 controls the number of revolutions of compressor 38 based on the control of air conditioner ECU 109 and notifies air conditioner ECU 109 of the number of revolutions or the like of compressor 38.

Blower fan control section 107 controls the number of revolutions of a blower fan in HVAC 70 based on the control of air conditioner ECU 109 and notifies air conditioner ECU 109 of the number of revolutions or the like of the blower fan.

Water pump control section 108 controls the number of revolutions of water pump based on the control of air conditioner ECU 109, and notifies air conditioner ECU 109 of the number of revolutions or the like of water pump 16.

Air conditioner ECU 109 determines whether or not stagnation has occurred in the cooling refrigerant cycle in the heating mode based on information from various detection sections, switches, and various control sections, and performs, when stagnation has occurred, a stagnant refrigerant recycling operation of collecting the stagnant refrigerant in the heating refrigerant cycle and performs, when stagnation has not occurred, a normal operation. A detailed operation of air conditioner ECU 109 will be described later.

### <Operation of Air Conditioner ECU>

Next, a detailed operation of aforementioned air conditioner ECU 109 will be described using FIG. 4.

In FIG. 4, in step (hereinafter abbreviated as "ST") 201, air conditioner ECU 109 is activated in response to ignition ON operation, and in ST202, air conditioner ECU 109 initializes various detection sections and an actuator for opening/closing various doors provided in HVAC 70.

In ST203, air conditioner ECU 109 determines whether or not air conditioner ON instruction is received from AC switch section 104, and proceeds to ST204 when an air conditioner ON instruction is received (YES) or ends the operation of air conditioner ECU 109 when no air conditioner ON instruction is received (NO).

In ST204, air conditioner ECU 109 acquires detection information from the various detection sections, and in ST205, air conditioner ECU 109 performs stagnant refrigerant determining processing. Details of the stagnant refrigerant determining processing will be described later.

In ST206, air conditioner ECU 109 determines whether or not stagnation of the refrigerant has occurred as a result of the stagnant refrigerant determining processing in ST205 and proceeds to ST207 when stagnation has occurred (YES), or proceeds to ST208 when no stagnation has occurred (NO).

In ST207, air conditioner ECU 109 performs stagnant refrigerant recycling operation and returns to ST203. Details of the stagnant refrigerant recycling operation will be described later.

In ST208, air conditioner ECU 109 performs a normal operation and returns to ST203, Details of the normal operation will be described later.

### <Stagnation Determining Processing>

Next, the stagnant refrigerant determining processing shown in FIG. 4 will be described using FIG. 5.

In FIG. 5, in ST301, air conditioner ECU 109 determines whether the number of revolutions of compressor 38 has not been changed, and proceeds to ST302 when there is no change (YES) or proceeds to ST308 when there is a change (NO).

In ST302, air conditioner ECU 109 determines whether the number of revolutions (volume of air) of the blower fan in HVAC 70 has not been changed, and proceeds to ST303 when there is no change (YES) or proceeds to ST308 when there is a change (NO).

In ST303, air conditioner ECU 109 determines whether the operating mode has not been changed, and proceeds to ST304 when there is no change (YES) or proceeds to ST308 when there is a change (NO).

In ST304, air conditioner ECU 109 determines whether the number of revolutions of water pump 16 has been changed, and proceeds to ST305 when there is no change (YES) or proceeds to ST308 when there is a change (NO). Note that steps ST301 to ST304 may be performed in any order or performed simultaneously.

In ST305, air conditioner ECU 109 determines whether or not a stagnation determining timer is set, proceeds to ST310 when the stagnation determining timer is set (YES) or proceeds to ST306 when the stagnation determining timer is not set (NO).

In ST306, air conditioner ECU 109 acquires discharge temperature Td of the refrigerant and outlet water temperature Tsc_out of the coolant in second water-refrigerant heat exchanger 12, and stores these values as reference values, and in ST307, air conditioner ECU 109 sets the stagnation determining timer to set value Twait seconds and ends the stagnant refrigerant determining processing.

In ST308, air conditioner ECU 109 deletes the stagnation determining timer set in ST307 and determines in ST309 that no stagnation of the refrigerant has occurred and ends the stagnant refrigerant determining processing.

In ST310, air conditioner ECU 109 determines whether or not set value Twait seconds have elapsed in the stagnation determining timer, proceeds to ST312 when Twait seconds have elapsed (YES) or determines in ST311 that no stagnation of the refrigerant has occurred when Twait seconds have not elapsed (NO), and ends the stagnant refrigerant determining processing.

In ST312, air conditioner ECU 109 acquires discharge temperature Td of the refrigerant and outlet water temperature Tsc_out of the coolant in second water-refrigerant heat exchanger 12, and determines in ST313, from the reference values stored in ST306 and discharge temperature Td of the refrigerant and outlet water temperature Tsc_out of the coolant acquired in ST312, whether the conditions that variation ΔTd of discharge temperature Td of the refrigerant should be equal to or greater than 0 and variation ΔTsc_out of the outlet water temperature of second water-refrigerant heat exchanger 12 should be smaller than 0 are satisfied or not. Air conditioner ECU 109 proceeds to ST314 when these conditions are satisfied (YES) or proceeds to ST315 when these conditions are not satisfied (NO).

In ST314, air conditioner ECU 109 determines that stagnation of the refrigerant has occurred or on the other hand, determines in ST315 that stagnation of the refrigerant has not occurred.

In ST316, air conditioner ECU 109 deletes the stagnation determining timer and ends the stagnant refrigerant determining processing.

Thus, in the stagnant refrigerant determining processing, it is determined that stagnation of the refrigerant has occurred when outlet water temperature Tsc_out of second water-refrigerant heat exchanger 12 has decreased despite the fact that discharge temperature Td remains constant or has increased under the condition that there is no change in the number of revolutions of the compressor, the number of revolutions of the blower fan, operating mode (corresponding to external air temperature and ambient temperature) and the number of revolutions of the water pump. Since stagnation of the refrigerant namely means a decrease in the amount of refrigerant in the heating refrigerant cycle, the stagnant refrigerant determining processing corresponds to a section that detects a decrease in the amount of refrigerant in the heating refrigerant cycle.

Note that in the above description, discharge temperature Td of the refrigerant and outlet water temperature Tsc_out of the coolant in second water-refrigerant heat exchanger 12 are used for the stagnant refrigerant determining processing under the condition that there is no change in the number of revolutions of the compressor, the number of revolutions of the blower fan, operating mode (corresponding to the external air temperature and the ambient temperature) and the number of revolutions of the water pump, but the present invention is not limited to this. For example, under the above-described condition, stagnation of the refrigerant may also be determined from the discharge pressure and the discharge temperature of the refrigerant, and in this case, when the discharge temperature remains constant and the discharge pressure decreases, it is determined that stagnation of the refrigerant has occurred. Furthermore, the degree of overheating of the compressor suction section indicating that the refrigerant cycle is in a refrigerant shortage state may be measured directly, and in this case, it is determined that stagnation of the refrigerant has occurred if the degree of overheating increases.

### <Stagnant Refrigerant Recycling Operation>

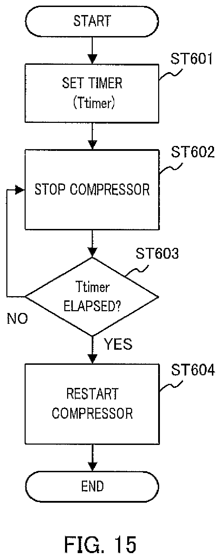

Next, the stagnant refrigerant recycling operation shown in FIG. 4 will be described using FIG. 15.

In FIG. 15, air conditioner ECU 109 sets the timer to set value Ttimer (e.g., 30 seconds) in ST601 and stops compressor 38 in ST602.

Air conditioner ECU 109 determines, in ST603, whether or not Ttimer seconds have elapsed in the timer, and proceeds to ST604 when Ttimer seconds have elapsed (YES) or returns to ST602 when Ttimer seconds have not elapsed (NO).

In ST604, air conditioner ECU 109 restarts compressor 38 and ends the stagnant refrigerant recycling operation.

Thus, when stagnation occurs, performing operation of temporarily stopping and restarting compressor 38 causes the refrigerant suction pressure of compressor 38 to temporarily decrease and makes it possible to recycle the refrigerant stored in outdoor condenser 39 into compressor 38 and return the refrigerant to the heating refrigerant cycle. Note that the operation of temporarily stopping and restarting compressor 38 once is shown in FIG. 6, but an intermittent operation of repeating this operation may also be performed.

### <Normal Operation Processing>

Next, the normal operation shown in FIG. 4 will be described using FIG. 8.

In FIG. 8, in ST501, air conditioner ECU 109 calculates a target blow-off temperature.

In ST502, air conditioner ECU 109 indicates the number of revolutions of compressor 38 based on the target blow-off temperature and indicates in ST503 the number of revolutions of water pump 16 based on the target blow-off temperature.

### <Situation of Stagnation of Refrigerant>

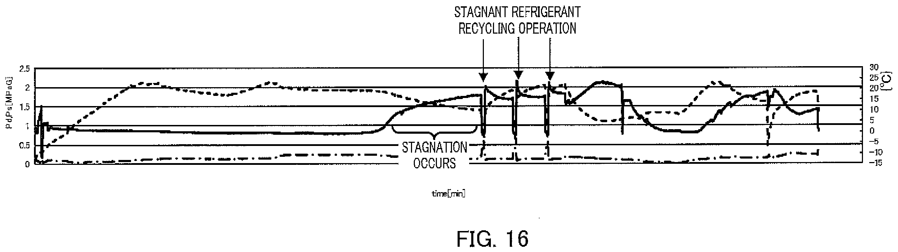

FIG. 16 is a diagram illustrating a situation of stagnation of the refrigerant together with a discharge pressure and a suction pressure of the refrigerant. In FIG. 16, the horizontal axis shows a time scale and the vertical axis shows a pressure and a temperature. A solid line shows the degree of overheating of a compressor suction section indicating the status of stagnation, a dotted line shows a discharge pressure of the refrigerant and a single-dot dashed line shows a suction pressure of the refrigerant. Note that the degree of overheating of the compressor suction section increases when the refrigerant stagnates and decreases when stagnation of the refrigerant is resolved.

It is observed in FIG. 16 that when the degree of overheating of the compressor suction section increases and stagnation occurs, the discharge pressure starts decreasing. Here, the discharge pressure decreases abruptly when the stagnant refrigerant recycling operation is performed and compressor 38 is stopped temporarily, whereas the discharge pressure is restored and the suction pressure increases abruptly when compressor 38 is restarted. At this time, it is seen that the degree of overheating of the compressor suction section also decreases abruptly and stagnation of the refrigerant is canceled temporarily. In FIG. 16, the stagnant refrigerant recycling operation (intermittent operation of the compressor) is continued thereafter too.

### <Effects of Example 2>

Thus, vehicle air conditioning apparatus 1 of Example 2 includes compressor 38 and the heating refrigerant cycle and the cooling refrigerant cycle that have part of a path in common, temporarily stops and restarts compressor 38 when air conditioner ECU 109 detects a decrease in the amount of refrigerant in the heating refrigerant cycle due to inflow of the refrigerant into the cooling refrigerant cycle.

This causes the refrigerant suction pressure of compressor 38 to temporarily decrease, making it possible to recycle the refrigerant stored in the cooling refrigerant cycle into compressor 38 and return the refrigerant to the heating refrigerant cycle. As a result, it is possible to suppress deterioration of heating performance.

There is no need to provide a check valve that prevents the refrigerant from flowing from the heating refrigerant cycle into the cooling refrigerant cycle, and it is thereby possible to avoid pressure loss which may occur when the check valve is provided, while avoiding deterioration of air conditioning performance caused by the pressure loss and also to suppress a cost increase.

A case has been described where vehicle air conditioning apparatus 1 includes accumulator 17. However, the present invention is not limited to this and vehicle air conditioning apparatus 1 may not include accumulator 17.

The channel of the coolant shown in FIG. 10 may be applied or the refrigerant circuit shown in FIG. 11 may be applied in Example 2 as well.

Note that compressor 38 in the above-described example has been described as an electrically driven compressor whose number of revolutions is controllable such as an electric compressor, but compressor 38 may be a compressor driven by power of an engine. As the compressor driven by an engine, a fixed capacity compressor whose discharge capacity is fixed and a variable capacity compressor whose discharge capacity is variable are both applicable.

The compressor driven by an engine can start compression of a refrigerant by turning on a clutch and stop compression of the refrigerant by turning off the clutch. When the compressor driven by an engine is used, "stop compressor 38" in ST602 in FIG. 15 can be realized by turning off the clutch. When the compressor driven by an engine is used, "restart compressor 38" in ST604 in FIG. 15 can be realized by turning on the clutch.

### Industrial Applicability

The present invention is applicable to a vehicle air conditioning apparatus mounted on a vehicle.

### Reference Signs List

1 Vehicle air conditioning apparatus
11 First water-refrigerant heat exchanger
12 Second water-refrigerant heat exchanger
13, 15 On-off valve
14 Electromagnetic-valve-equipped expansion valve
16 Second water pump
37, 43 Expansion valve
38 Compressor
39 Outdoor condenser
40 Engine cooling section
42 First water pump
44 Heater core
48 Evaporator
70 HVAC
h1 to h4 Pipe
j1 to j4 Refrigerant pipe
101 Discharge temperature detection section
102 Discharge pressure detection section
103 Operating mode storage section
104 AC switch section
105 Blow-off temperature detection section
106 Compressor control section
107 Blower fan control section
108 Water pump control section
109 Air conditioner ECU

## Claims

1. A vehicle air conditioning apparatus (1) comprising:
a first refrigerant cycle that corresponds to a path for circulating a refrigerant and that forms a first heat pump cycle;
a second refrigerant cycle that corresponds to a path for circulating a refrigerant, that forms a second heat pump cycle which is different from the first heat pump cycle and that shares part of the path with the first refrigerant cycle;
a first water-refrigerant heat exchanger (11) that is included in the first refrigerant cycle and that exchanges heat between a low-temperature and low-pressure refrigerant and a coolant of a heat-generating member (40) of a vehicle to vaporize the refrigerant;
a second water-refrigerant heat exchanger (12) that exchanges heat between a high-temperature and high-pressure refrigerant and a heat transfer coolant to condense the refrigerant;
a flow rate adjusting section (42) that adjusts a flow rate of the coolant flowing through the heat-generating member (40) and the first water-refrigerant heat exchanger (11);
a detecting section (109) that detects a decrease in an amount of refrigerant in the first refrigerant cycle due to inflow of the refrigerant into the second refrigerant cycle; a controlling section (108) that controls the flow rate adjusting section (42) to reduce the flow rate of the coolant, when a decrease in the amount of refrigerant in the first refrigerant cycle is detected;
a compressor (38) that is shared and used by the first refrigerant cycle and the second refrigerant cycle to compress and discharge the refrigerant;
an outdoor condenser (39) that radiates heat from the refrigerant to external air to condense the refrigerant; and
an evaporator (48) that absorbs heat from intake air to be sent into the vehicle interior to vaporize the refrigerant, wherein
the first refrigerant cycle comprises the second water-refrigerant heat exchanger (12), the first water-refrigerant heat exchanger (11), and the compressor (38), through which the refrigerant flows in this order, and
the second refrigerant cycle comprises the compressor (38), the second water-refrigerant heat exchanger (12), the outdoor condenser (39), and the evaporator (48), through which the refrigerant flows in this order.

2. The vehicle air conditioning apparatus (1) according to claim 1, wherein the coolant is caused to circulate between the heat-generating member (40) and the first water-refrigerant heat exchanger (11).

3. The vehicle air conditioning apparatus (1) according to claim 1, further comprising a heater core (44) through which the coolant flows and which gives heat to air to be sent into an vehicle interior, wherein
the coolant is caused to circulate among the heat-generating member (40), the second water-refrigerant heat exchanger (12), the heater core (44), and the first water-refrigerant heat exchanger (11).

4. The vehicle air conditioning apparatus (1) according to any one of claims 1 to 3, wherein the controlling section (108) controls the flow rate adjusting section (42) to set the flow rate of the coolant to zero, when a decrease in the amount of refrigerant is detected in the first refrigerant cycle.

5. The vehicle air conditioning apparatus (1) according to claim 1, wherein the first refrigerant cycle and the second refrigerant cycle are joined and connected together at a refrigerant suction port of the compressor (38).

6. The vehicle air conditioning apparatus (1) according to claim 5, wherein the first refrigerant cycle and the second refrigerant cycle are joined and connected together without interposing any valve that prevents the refrigerant from flowing from the first refrigerant cycle into the second refrigerant cycle.

## Patentansprüche

1. Fahrzeugklimaanlage (1), umfassend:
einen ersten Kältemittelkreislauf, der einem Weg zum Umwälzen eines Kältemittels entspricht und einen ersten Wärmepumpenkreislauf bildet;
einen zweiten Kältemittelkreislauf, der einem Weg zum Umwälzen eines Kältemittels entspricht, der einen zweiten Wärmepumpenkreislauf bildet, der sich von dem ersten Wärmepumpenkreislauf unterscheidet und der einen Teil des Wegs mit dem ersten Kältemittelkreislauf teilt;
einen ersten Wasser-Kältemittel-Wärmetauscher (11), der in dem ersten Kältemittelkreislauf enthalten ist und der Wärme zwischen einem Niedertemperatur- und Niederdruck-Kältemittel und einem Kühlmittel eines wärmeerzeugenden Elements (40) eines Fahrzeugs austauscht, um das Kältemittel zu verdampfen;
einen zweiten Wasser-Kältemittel-Wärmetauscher (12), der Wärme zwischen einem Hochtemperatur- und Hochdruckkältemittel und einem Wärmeträgerkühlmittel austauscht, um das Kältemittel zu kondensieren;
einen Durchfluss-Einstellabschnitt (42), der einen Durchfluss des Kühlmittels einstellt, das durch das wärmeerzeugende Element (40) und den ersten Wasser-Kältemittel-Wärmetauscher (11) strömt;
einen Erfassungsabschnitt (109), der eine Abnahme einer Kältemittelmenge in dem ersten Kältemittelkreislauf aufgrund des Einströmens des Kältemittels in den zweiten Kältemittelkreislauf erfasst;
einen Regulierungsabschnitt (108), der den Durchfluss-Einstellabschnitt (42) reguliert, um den Durchfluss des Kältemittels zu reduzieren, wenn eine Abnahme der Kältemittelmenge in dem ersten Kältemittelkreislauf erfasst wird;
einen Verdichter (38), der von dem ersten Kältemittelkreislauf und dem zweiten Kältemittelkreislauf geteilt und genutzt wird, um das Kältemittel zu verdichten und auszulassen;
einen Außenkondensator (39), der Wärme von dem Kältemittel an Außenluft abgibt, um das Kältemittel zu kondensieren; und
einen Verdampfer (48), der Wärme aus der Einlassluft absorbiert, die in den Fahrzeuginnenraum geleitet wird, um das Kältemittel zu verdampfen, wobei
der erste Kältemittelkreislauf den zweiten Wasser-Kältemittel-Wärmetauscher (12), den ersten Wasser-Kältemittel-Wärmetauscher (11) und den Verdichter (38), durch die das Kältemittel in dieser Reihenfolge strömt, umfasst, und
der zweite Kältemittelkreislauf den Verdichter (38), den zweiten Wasser-Kältemittel-Wärmetauscher (12), den Außenkondensator (39) und den Verdampfer (48), durch die das Kältemittel in dieser Reihenfolge strömt, umfasst.

2. Fahrzeugklimaanlage (1) nach Anspruch 1, wobei das Kühlmittel veranlasst wird, zwischen dem wärmeerzeugenden Element (40) und dem ersten Wasser-Kältemittel-Wärmetauscher (11) zu zirkulieren.

3. Fahrzeugklimaanlage (1) nach Anspruch 1, ferner umfassend einen Heizungskühler (44), durch den das Kühlmittel strömt und der Wärme an Luft abgibt, die in einen Fahrzeuginnenraum geleitet werden soll, wobei
das Kühlmittel veranlasst wird, zwischen dem wärmeerzeugenden Element (40), dem zweiten Wasser-Kältemittel-Wärmetauscher (12), dem Heizungskühler (44) und dem ersten Wasser-Kältemittel-Wärmetauscher (11) zu zirkulieren.

4. Fahrzeugklimaanlage (1) nach einem der Ansprüche 1 bis 3, wobei der Regulierungsabschnitt (108) den Durchfluss-Einstellabschnitt (42) reguliert, um den Durchfluss des Kühlmittels auf null einzustellen, wenn im ersten Kältemittelkreislauf eine Abnahme der Kältemittelmenge erfasst wird.

5. Fahrzeugklimaanlage (1) nach Anspruch 1, wobei der erste Kältemittelkreislauf und der zweite Kältemittelkreislauf verbunden und an einer Kältemittel-Saugöffnung des Verdichters (38) miteinander verbunden sind.

6. Fahrzeugklimaanlage (1) nach Anspruch 5, wobei der erste Kältemittelkreislauf und der zweite Kältemittelkreislauf zusammengefügt und miteinander verbunden sind, ohne ein Ventil zwischenzuschalten, das verhindert, dass das Kältemittel aus dem ersten Kältemittelkreislauf in den zweiten Kältemittelkreislauf strömt.

## Revendications

1. Dispositif de climatisation pour véhicule (1), comprenant :
un premier cycle de réfrigérant qui correspond à un trajet destiné à la circulation d'un réfrigérant et qui forme un premier cycle de pompe à chaleur ;
un second cycle de réfrigérant qui correspond à un trajet destiné à la circulation d'un réfrigérant, qui forme un second cycle de pompe à chaleur qui est différent du premier cycle de pompe à chaleur et qui partage une partie du trajet avec le premier cycle de réfrigérant ;
un premier échangeur de chaleur eau-réfrigérant (11) qui est intégré dans le premier cycle de réfrigérant et qui échange de la chaleur entre un réfrigérant à basse température et à basse pression et un liquide de refroidissement d'un élément de génération de chaleur (40) d'un véhicule pour vaporiser le réfrigérant ;
un second échangeur de chaleur eau-réfrigérant (12) qui échange de la chaleur entre un réfrigérant à haute température et à haute pression et un liquide de refroidissement de transfert de chaleur pour condenser le réfrigérant ;
une section de réglage du débit (42) qui règle un débit du liquide de refroidissement circulant à travers l'élément de génération de chaleur (40) et le premier échangeur de chaleur eau-réfrigérant (11) ;
une section de détection (109) qui détecte une baisse de la quantité de réfrigérant dans le premier cycle de réfrigérant du fait du flux d'entrée du réfrigérant dans le second cycle de réfrigérant ;
une section de commande (108) qui commande la section de réglage du débit (42) pour diminuer le débit du liquide de refroidissement, lorsqu'une baisse de la quantité de réfrigérant dans le premier cycle de réfrigérant est détectée ;
un compresseur (38) qui est partagé et utilisé par le premier cycle de réfrigérant et le second cycle de réfrigérant pour comprimer et refouler le réfrigérant ;
un condenseur externe (39) qui diffuse la chaleur du réfrigérant vers l'air extérieur pour condenser le réfrigérant ; et
un évaporateur (48) qui absorbe la chaleur provenant de l'admission d'air pour l'envoyer à l'intérieur du véhicule pour vaporiser le réfrigérant, dans lequel
le premier cycle de réfrigérant comprend le second échangeur de chaleur eau-réfrigérant (12), le premier échangeur de chaleur eau-réfrigérant (11), et le compresseur (38), à travers lesquels le réfrigérant circule dans cet ordre, et
le second cycle de réfrigérant comprend le compresseur (38), le second échangeur de chaleur eau-réfrigérant (12), le condenseur externe (39), et l'évaporateur (48), à travers lesquels le réfrigérant circule dans cet ordre.

2. Dispositif de climatisation pour véhicule (1) selon la revendication 1, dans lequel le liquide de refroidissement est amené à circuler entre l'élément de génération de chaleur (40) et le premier échangeur de chaleur eau-réfrigérant (11).

3. Dispositif de climatisation pour véhicule (1) selon la revendication 1, comprenant en outre un radiateur de chauffage (44) à travers lequel circule le liquide de refroidissement et qui restitue la chaleur à l'air à envoyer à l'intérieur du véhicule, où
le liquide de refroidissement est amené à circuler parmi l'élément de génération de chaleur (40), le second échangeur de chaleur eau-réfrigérant (12), le radiateur de chauffage (44), et le premier échangeur de chaleur eau-réfrigérant (11).

4. Dispositif de climatisation pour véhicule (1) selon l'une quelconque des revendications 1 à 3, dans lequel la section de commande (108) commande la section de réglage du débit (42) pour fixer le débit du liquide de refroidissement à zéro lorsqu'une baisse de la quantité de réfrigérant est détectée dans le premier cycle de réfrigérant.

5. Dispositif de climatisation pour véhicule (1) selon la revendication 1, dans lequel le premier cycle de réfrigérant et le second cycle de réfrigérant sont réunis et reliés ensemble à un orifice d'aspiration du réfrigérant du compresseur (38).

6. Dispositif de climatisation pour véhicule (1) selon la revendication 5, dans lequel le premier cycle de réfrigérant et le second cycle de réfrigérant sont réunis et reliés ensemble sans interposition d'une quelconque vanne qui empêche la circulation du réfrigérant du premier cycle de réfrigérant dans le second cycle de réfrigérant.
